# EUROPÄISCHE PATENTSCHRIFT

(11) **EP 4 574 655 B1**
(45) Veröffentlichungstag und Bekanntmachung des Hinweises auf die Patenterteilung: **12.08.2026**
(21) Anmeldenummer: 23218270.9
(22) Anmeldetag: 19.12.2023
(51) Int. Cl.: B64D 1/16

(54) **VERFAHREN ZUM UMBAU EINES PASSAGIERFLUGZEUGS IN EIN LÖSCHFLUGZEUG UND EIN FLUGZEUG**
METHOD FOR CONVERTING A PASSENGER AIRCRAFT INTO A FIRE-FIGHTING AIRCRAFT, AND AIRCRAFT
PROCÉDÉ DE CONVERSION D'UN AVION DE PASSAGERS EN UN AVION DE LUTTE CONTRE LES INCENDIES ET AÉRONEF

(43) Veröffentlichungstag der Anmeldung: 25.06.2025
(73) Patentinhaber: Airbus Operations GmbH, 21129 Hamburg (DE)
(72) Erfinder: Hegenbart, Matthias, 21129 Hamburg (DE); Robrecht, Volker, 21129 Hamburg (DE)
(74) Vertreter: Bird & Bird LLP - Hamburg

(56) Entgegenhaltungen:
- WO-A1-2012/131987
- WO-A1-2023/061897
- US-A- 4 195 693
- US-B2- 7 753 314

## Beschreibung

Die vorliegende Erfindung betrifft Verfahren zum Umbau eines Passagierflugzeugs mit einem Passagierdeck und einem darunter angeordneten Frachtdeck in ein Löschflugzeug und ein Flugzeug.

Passagierflugzeuge, die zu Löschflugzeugen umgebaut werden, sind bekannt. Bei solchen Umbauverfahren ("Retrofits") werden die Löschmittelbehälter in den (ehemaligen, d.h. entstuhlten) Passagierbereich gebracht und dort installiert. Rohrleitungen werden dann vom Löschmittelbehälter durch den Fußboden des Passagierraums geführt und durch den darunterliegenden Frachtraum nach außen. Die Ausbringung des Löschmittels erfolgt dann durch Druck und mit Hilfe der Schwerkraft. Bei solchen Umbauten sind große strukturelle Eingriffe und Umbauten notwendig, da das normale Passagierdeck nicht zum Tragen schwerer Lasten ausgelegt ist. Diese sind teuer und zeitaufwändig. Ein Rückbau in ein normales Passagierflugzeug nach einem solchen Retrofit ist dann finanziell nicht mehr lohnenswert. Gleichzeitig kommt es jedoch immer häufiger zu großflächigen Waldbränden und somit zu einem höheren Bedarf an Löschflugzeugen.

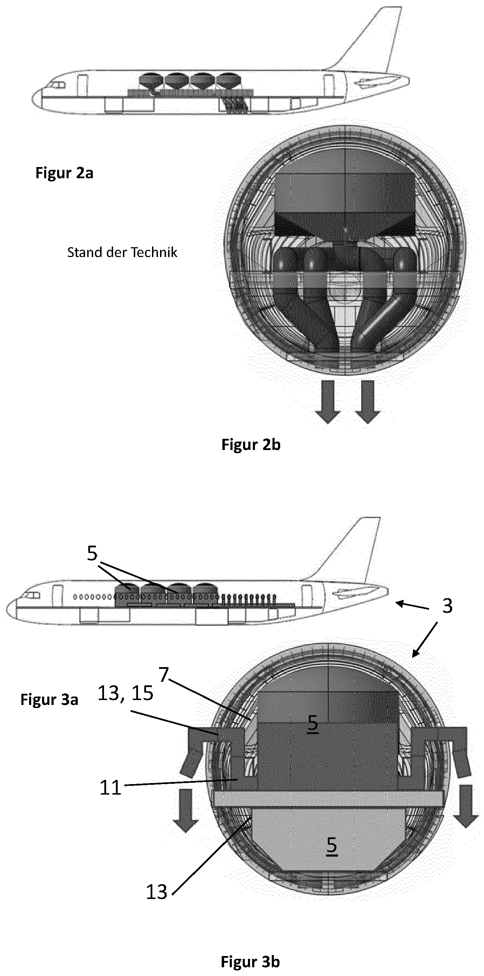

Konkret wurden bisher beispielsweise in einem zum Löschflugzeug umgebauten A320 Luftakkumulatoren mit Hilfe eines Kompressors gefüllt, um Löschmittelbehälter mit niedrigem Druck (~1,5 bar) zu bedrucken. Die Auslässe ("nozzles") für das Löschmittel verlaufen, wenn man das stehende Flugzeug von der Seite betrachtet, etwas angewinkelt vom Passagierbereich zum unteren Rumpfbereich, was einen großen strukturellen Eingriff bedeutet (siehe hierzu beispielhaft Figuren 2a und b). Dadurch bedingt mussten auch VHF-Antenne und Radio-Altimeter umgesetzt werden. Es gibt ferner einen Computer sowie ein Panel zur elektronischen Steuerung des Löschmittelauslassens.

WO 2023/061897 A1 offenbart ein Dispersionssystem für ein Fahrzeug, umfassend einen Verschluss, der dazu ausgelegt ist, ein Reservoir gegenüber einem Auslasskanal fluiddicht zu verschließen, sowie eine Steuerung, die dazu ausgelegt ist, den Verschluss jedes Tankmoduls individuell zu öffnen. US 7,753,314 B2 offenbart ein Verfahren zum Umbau eines Starrflügel-Großraumflugzeugs zur luftgestützten Ausbringung von Material, wie beispielsweise Feuerlöschmaterial, wobei Tanks zur Aufnahme des auszubringenden Materials innerhalb des Flugzeugs installiert werden. US 4,195,693 A offenbart eine von einem Flugzeug getragene Feuerlöschanlage, umfassend einen länglichen Löschmitteltank, der mit einer Neigung in Richtung des Flugzeughecks angeordnet ist. WO 2012/131987 A1 offenbart eine lastverteilende Platte, die auf einer Bodenfläche eines Frachtraums eines Flugzeugs installiert ist, wobei die Platte eine starre Struktur aufweist, die auf einer oberen Fläche eines Hauptabschnitts angeordnet ist und dazu ausgelegt ist, das Platzieren von Fracht im Frachtraum zu ermöglichen. US 2023/068098 A1 offenbart ein Passagierflugzeug zur Verwendung beispielsweise auf einer Mittelstrecke, umfassend einen fest installierten Löschmitteltank zur Aufnahme von Löschwasser zum Bekämpfen von Großbränden sowie eine mit dem Tank verbundene Düse zur Ausbringung des Löschwassers.

Es ist also Aufgabe der vorliegenden Erfindung, eine reversible und somit kosteneffiziente Lösung für einen Umbau eines Passagierflugzeugs in ein Löschflugzeug bereitzustellen, bei der keine strukturellen Veränderungen vorgenommen werden.

Zur Lösung dieser Aufgabe dient das Verfahren mit den Merkmalen von Patentanspruch 1 sowie das Flugzeug mit den Merkmalen des Anspruchs 7. Vorteilhafte Ausführungsformen sind Gegenstand der jeweiligen Unteransprüche.

Das erfindungsgemäße Verfahren zum Umbau eines Passagierflugzeugs mit einem Passagierdeck und einem darunter angeordneten Frachtdeck in ein Löschflugzeug erfolgt durch folgende Schritte:
a. Entfernen von Passagiersitzen aus dem Passagierdeck. Dieser Schritt kann - wenn bei dem betroffenen Passagierflugzeug aufgrund der bei jeder Airline unterschiedlichen Kabinenarchitektur vonnöten - ergänzt werden durch das Entfernen von Kabinenmonumenten wie beispielsweise Küchen, Waschräumen oder Stauraum. Wesentlich hierbei ist, dass genügend Stellplatz entsteht für die weiter unten erwähnten Behälter zur Aufnahme von Löschmittel;
b. Entfernen von Seitenpaneelen aus dem Passagierdeck. In diesem Schritt geht es darum, strukturelle Befestigungspunkte und auch die Fenster für den weiteren Umbau des Flugzeugs freizulegen;
c. Integrieren von wenigstens einem Behälter zur Aufnahme von Löschmittel in dem Passagierdeck, wobei der Behälter mit Luft bedruckbar ist. In diesem Schritt wird ein (oder mehrere) Behälter durch eine Eingangstür des Passagierdecks gebracht. Die Behälter können in einem Stück oder zerlegt in das Flugzeuginnere gebracht werden. Diesem Schritt kann vorausgehen, dass z.B. Lastverteilungspaletten in das Passagierdeck eingebracht werden. Diese sind bevorzugt an Sitzschienen befestigt, um eine gute Anbindung an die Flugzeugstruktur erhalten. Mittels Lastverteilungspaletten werden große punktuelle Lasten flächig verteilt, so dass eine punktuelle Überlastung des Fußbodens im Passagierdecks vermieden wird. Natürlich ist es auch denkbar, dass andere Mittel verwendet werden, die für eine alternative Lastverteilung sorgen, solange eine punktuelle Überlastung des Passagierdecksfußbodens vermieden wird, z.B. ein Raumgerüst im Passagierdeck zum Halten eines Behälters zur Aufnahme von Löschmitteln;
d. Auswechseln mehrerer Fenster des Passagierdecks durch Scheiben mit einem Durchlass. Mit dem Begriff "Fenster" ist hierbei der gesamte Fensteraufbau gemeint, also die transparente Fensterscheibe und der zugehörige Rahmen. Diese Auswechsel-Scheiben ersetzen also den gesamten vorherigen Fensteraufbau. Die Scheiben können blind und beispielsweise aus Metall sein. Der Durchlass in den Scheiben ist dafür geeignet, dass durch ihn Löschmittel transportiert werden kann. Der Durchmesser der Durchlässe orientiert sich an der Größe der zur Verfügung stehenden Fensteröffnungen des Passagierdecks, üblicherweise sind das ca. 20 cm x ca. 30 cm.;
e. Integrieren von Rohrleitungen in das Passagierdeck derart, dass Löschmittel aus den Behältern über die Rohrleitungen im Passagierdeck und über wenigstens einen Durchlass im Passagierdeck vom Flugzeuginneren nach außerhalb des Flugzeugs transportiert werden kann. Die Rohrleitungen verlaufen also von einem Behälter zur Aufnahme von Löschmittel oberhalb des Fußbodens des ausgeräumten Passagierdecks. Auf diese Weise kommt es zu keinen strukturellen Eingriffen in den Fußboden - üblicherweise verlaufen die löschmittelführenden Rohrleitungen durch den Fußboden und verändern somit den strukturellen Aufbau der Flugzeugkabine. Der Einbau der Rohrleitungen erfolgt praktischerweise über die Tür(en) des Passagierdecks;
f. Einbauen jeweils wenigstens eines steuerbaren (also öffnen- und schließbaren) Ventils an dem wenigstens einen Behälter, den Rohrleitungen und dem Durchlass. Steht der wenigstens eine mit Luft bedruckte Behälter unter einem genügend großen Druck, so gelangt durch das Öffnen des steuerbaren Ventils das Löschmittel mittels des Überdrucks nach außerhalb des Flugzeugs. Durch eine intelligente Kopplung an die Position des Flugzeugs und an Wetterumgebungsdaten kann somit ein zielgerichteter Löschvorgang initiiert werden. Die Steuerung des Ventils kann beispielsweise im einfachsten Fall manuell mit einem Hebel ausgelöst werden, so dass anschließend das Löschmittel durch die am äußeren Ende des Durchlasses angeordnete Düse aus dem Flugzeuginneren entweicht. Diese Düsen sind (zusammen mit den Durchlässen an sich) zum einen so ausrichtbar (auf manuelle und/oder elektronische Weise), dass eine Verteilung des Löschmittels in eine gewünschte Richtung erfolgt. Zum anderen ist es zusätzlich auch möglich, dass auch noch die Düsen an sich als Endstück separat feinjustiert werden (manuell oder auch elektronisch).

Das erfindungsgemäße Verfahren kann aber ferner auch den Schritt Einbauen einer elektrischen Kontrolleinheit umfassen, so dass das wenigstens eine Ventil mittels dieser Kontrolleinheit geöffnet oder geschlossen werden kann. Hierbei ist eine elektronische Kopplung an die Position des Flugzeugs und natürlich auch das Wetter, wie z. B. die Windrichtung (luv & lee) denkbar. Insbesondere kann beispielsweise ein erstes Ventil am Behälter zur Aufnahme von Löschmittel angeordnet und ansteuerbar sein und ferner noch ein zweites (drittes etc.) separat ansteuerbares Ventil am Durchlass oder der Düse. Diese separate Ansteuerungsmöglichkeit erhöht die Sicherheit, dass das Löschmittel erst bei den gewünschten Koordinaten nach Außenbords des Flugzeugs gelangt.

In einer möglichen Variante des erfindungsgemäßen Verfahrens weist der Behälter zur Aufnahme von Löschmittel ein starres Volumen auf. Solche Behälter können einstückig oder modular aufgebaut sein (letzteres insbesondere, um den Einbau zu vereinfachen, dem der Einbau durch eine normale Passagiertür eines Passagierdecks erfolgen kann). Der Vorteil eines starren Behälters ist strukturelle Stabilität.

In einer anderen möglichen Variante des erfindungsgemäßen Verfahrens weist der Behälter zur Aufnahme von Löschmittel zumindest teilweise ein flexibles Volumen auf. Es kann sich also um ein komplett flexibles Volumen oder aber auch um eine Kombination eines starren Volumens (z.B. im unteren Bereich des Behälters) mit einem flexiblen Volumen (z.B. im oberen Bereich des Behälters) handeln. Die Behälter mit flexiblen Volumen sind gut in ein Flugzeug hineinbringbar, da sie die festen Rahmenbedingungen der Flugzeugtür leichter überwinden.

Wenn das erfindungsgemäße Umbauverfahren mit einem starren Behälter durchgeführt wird, so umfasst es das Befestigen dieses Behälters zur Aufnahme von Löschmittel an Sitzschienen mittels Tanklastverteilerpaletten. Dies sorgen für eine homogene Verteilung der Lasten bzw. für eine Vermeidung von hohen punktuellen Lasten.

In dem Fall, dass das erfindungsgemäße Verfahren mit einem Behälter zur Aufnahme von Löschmittel mit einem zumindest teilweise flexiblen Volumen durchgeführt wird, umfasst das Verfahren ferner den Schritt Einbauen eines dreidimensionalen Gerüsts ("Raumgerüst") in dem Passagierdeck. Der Schritt c) umfasst dann das Befestigen des Behälters zur Aufnahme von Löschmittel an diesem dreidimensionalen Gerüst. Auf diese Weise kann ein an den zur Verfügung stehenden Platz im Flugzeug angepasster Behälter zur Aufnahme von Löschmittel zum Einsatz kommen.

Das erfindungsgemäße Flugzeug hat ein Passagierdeck und ein unterhalb davon angeordnetes Frachtdeck. Es hat ferner wenigstens einen Behälter zur Aufnahme von Löschmittel in dem Passagierdeck. Es gibt außerdem wenigstens einen Durchlass in dem Passagierdeck vom Flugzeuginneren ins Flugzeugäußere sowie in dem Passagierdeck angeordnete Rohrleitungen, derart, dass Löschmittel aus dem wenigstens einen Behälter durch die Rohrleitungen und den wenigstens einen Durchlass vom Flugzeuginneren nach außerhalb des Flugzeugs transportiert werden kann. "In dem Passagierdeck angeordnet" bedeutet vorliegend, dass die Rohrleitungen ohne strukturelle Veränderungen vorzunehmen zwischen dem Fußboden und der Decke des Passagierdecks angeordnet sind.

Hierbei ist der wenigstens eine Behälter mit Luft bedruckbar, um Löschmittel mit Hilfe des Drucks von dem wenigstens einen Behälter zu dem wenigstens einen Durchlass und somit nach außerhalb des Flugzeugs zu transportieren, wobei der wenigstens eine Behälter, die Rohrleitungen und der Durchlass jeweils wenigstens ein mittels einer Kontrolleinheit steuerbares Ventil aufweisen. Bevorzugt ist das wenigstens eine Ventil an dem Behälter angeordnet.

Das Flugzeug kann ferner eine Kontrolleinheit zum Öffnen und/oder Schließen des wenigstens einen Ventils haben. Eine solche Kontrolleinheit kann im einfachsten Fall ein mechanischer Hebel, jedoch bevorzugt eine elektrische Steuerung mit einer Human Machine Interface (HMI)-Einheit sein. Auf diese Weise kann im Flugzeug direkt durch den Piloten ein Löschvorgang initiiert werden, es ist also keine zweite Person notwendig.

Bevorzugt umfasst der scheibenförmige Einsatz Metall. Hierdurch ist der scheibenförmige Einsatz stabil und
In einer Ausführungsform des erfindungsgemäßen Flugzeugs hat der Behälter zur Aufnahme von Löschmittel ein starres Volumen. Hierdurch ist der Behälter sehr stabil.

In einer weiteren Ausführungsform des erfindungsgemäßen Flugzeugs hat der Behälter zur Aufnahme von Löschmittel zumindest teilweise ein flexibles Volumen. Auf diese Weise kann der im Flugzeug zur Verfügung stehende Raum besonders gut und individuell genutzt werden.

Bevorzugt ist der Behälter zur Aufnahme von Löschmittel an Sitzschienen mittels Tanklastverteilerpaletten befestigt, so dass keine zu hohe Punktlasten auf den Fußboden wirken und ihn beschädigen.

In einer anderen bevorzugten Variante ist ein dreidimensionales Gerüst in dem Passagierdeck angeordnet und der Behälter zur Aufnahme von Löschmittel ist an dem Gerüst befestigt. Hierdurch kann der im Flugzeug zur Verfügung stehende Raum effizient ausgenutzt werden.

Um eine noch größere Menge Löschmittel transportieren und somit zum Löschen einsetzen zu können, sei der Vollständigkeit halber erwähnt, dass ein zusätzlicher Behälter im Cargodeck angeordnet sein kann, der mit dem wenigstens einen Behälter zur Aufnahme von Löschmittel im Passagierdeck so verbunden ist, dass er als dessen Erweiterung anzusehen ist. Diese Konstellation bedingt dann jedoch entweder einen größeren strukturellen Umbau, was jedoch der erfindungsgemäßen Idee des reversiblen Retrofit zuwiderläuft, oder ließe sich durch ein spezielles Fußbodenpaneel mit einer intergierten Öffnung realisieren. Das Löschmittel würde in dieser Variante vom Cargodeck zum Passagierdeck hochgepumpt werden

Die Erfindung wird im Folgenden unter Bezugnahme auf die Zeichnungen erläutert.

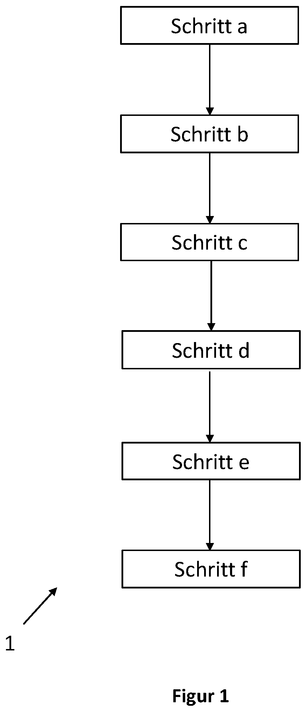

Figur 1 zeigt schematisch die Schritte des erfindungsgemäßen Umbauverfahrens.
Figur 2a zeigt die seitliche Ansicht eines Löschflugzeugs gemäß Stand der Technik.
Figur 2b zeigt einen Querschnitt eines Löschflugzeugs gemäß Stand der Technik.
Figur 3a zeigt die seitliche Ansicht eines erfindungsgemäßen Löschflugzeugs.
Figur 3b zeigt einen Querschnitt eines erfindungsgemäßen Löschflugzeugs.
Figur 4a zeigt einen schematischen Querschnitt durch ein erfindungsgemäßes Löschflugzeug mit einem Durchlass in einem Passagierdeck.
Figur 4b ist eine schematische Seitenansicht von erfindungsgemäßen Durchlässen in Fenstern in einem Passagierdeck.
Figur 5a zeigt schematisch den Aufbau eines Fenstereinsatzes mit einem Durchlass.
Figur 5b zeigt links eine perspektivische Ansicht und rechts eine seitliche Ansicht eines Fenstereinsatzes mit einem Durchlass und
Figur 6 ist eine seitliche Ansicht des Blindfensters mit integriertem Wasserdurchlass.

Das erfindungsgemäße Verfahren (1) zum Umbau eines Passagierflugzeugs mit einem Passagierdeck und einem darunter angeordneten Frachtdeck in ein Löschflugzeug hat die folgenden Schritte:
a. Entfernen von Passagiersitzen aus dem Passagierdeck, Wesentlich hierbei ist, dass genügend Stellplatz entsteht für die weiter unten erwähnten Behälter zur Aufnahme von Löschmittel;
b. Entfernen von Seitenpaneelen aus dem Passagierdeck. In diesem Schritt geht es darum, strukturelle Befestigungspunkte und auch die Fenster für den weiteren Umbau des Flugzeugs freizulegen;
c. Integrieren von wenigstens einem Behälter zur Aufnahme von Löschmittel in dem Passagierdeck, wobei der Behälter mit Luft bedruckbar ist. In diesem Schritt wird ein (oder mehrere) Behälter (in einem Stück oder zerlegt) durch die Passagiertür ins Flugzeuginnere in den Passagierraum gebracht. Wichtig an diesem Schritt ist, die strukturelle Belastung durch die schweren Löschmitteltanks auf die Belastbarkeit des Passagierraums anzupassen, entweder durch ein Hilfsgerüst oder z.B. Lasterverteilungspaletten (via Sitzschienen befestigt) auf dem Kabinenfußboden.
d. Auswechseln mehrerer Fenster des Passagierdecks durch Scheiben mit einem Durchlass.
e. Integrieren von Rohrleitungen in das Passagierdeck derart, dass Löschmittel aus den Behältern über die Rohrleitungen im Passagierdeck und über wenigstens einen Durchlass im Passagierdeck vom Flugzeuginneren nach außerhalb des Flugzeugs transportiert werden kann. Die Rohrleitungen verlaufen also von einem Behälter zur Aufnahme von Löschmittel oberhalb des Fußbodens des ausgeräumten Passagierdecks. Auf diese Weise kommt es zu keinen strukturellen Eingriffen in den Fußboden. (Im Stand der Technik verlaufen die löschmittelführenden Rohrleitungen durch den Fußboden und verändern somit den strukturellen Aufbau der Flugzeugkabine.) Der Einbau der Rohrleitungen erfolgt praktischerweise über die Tür(en) des Passagierdecks; Und
f. Einbauen wenigstens eines steuerbaren (also öffnen- und schließbaren) Ventils an dem wenigstens einen Behälter und/oder den Rohrleitungen und/oder dem Durchlass. Steht der wenigstens eine mit Luft bedruckte Behälter unter einem genügend großen Druck, so gelangt durch das Öffnen des steuerbaren Ventils das Löschmittel mittels des Überdrucks nach außerhalb des Flugzeugs. Durch eine intelligente Kopplung an die Position des Flugzeugs und an Wetterumgebungsdaten kann somit ein zielgerichteter Löschvorgang initiiert werden. Die Steuerung des Ventils kann elektronisch oder auch manuell mit einem Hebel ausgelöst werden.

In Figur 2a und 2b sieht man schematisch den Aufbau eines Löschflugzeugs aus dem Stand der Technik, das ursprünglich ein Passagierflugzeug gewesen ist. Behälter für Löschmittel sind im ehemaligen Passagierraum oberhalb des Frachtraums abgeordnet. Das Löschmittel wird hauptsächlich mit Hilfe der Schwerkraft über Rohrleitungen vom Passagierraum durch den Frachtraum vom Flugzeuginneren zum Flugzeugäußeren transportiert. Durch die Führung der Durchlässe kommt es zu einem großen strukturellen Eingriff und ein Rückbau des Löschflugzeugs in eine Passagiermaschine ist nicht ohne großen Arbeits- und Kostenaufwand möglich.

Figuren 3a und 3b zeigen das erfindungsgemäße Flugzeug 3. Man erkennt, dass die Behälter 5 zur Aufnahme von Löschmittel im Passagierdeck 7 angeordnet sind und dass der Fußboden 9 des Passagierdecks 7 noch intakt ist. In Figur 3 b sieht man (angedeutet durch die Pfeile) schematisch die Führung des Löschmittels vom Passagierdeck 7 über Rohrleitungen 11 durch die (ehemaligen) Fenster 13 mit einem Durchlass 15. Gegebenenfalls (wie hier zu sehen) kann zur Ergänzung des Löschmittelvolumens auch noch ein Behälter 5 zur Aufnahme von Löschmittel im Frachtdeck 13 untergebracht sein.

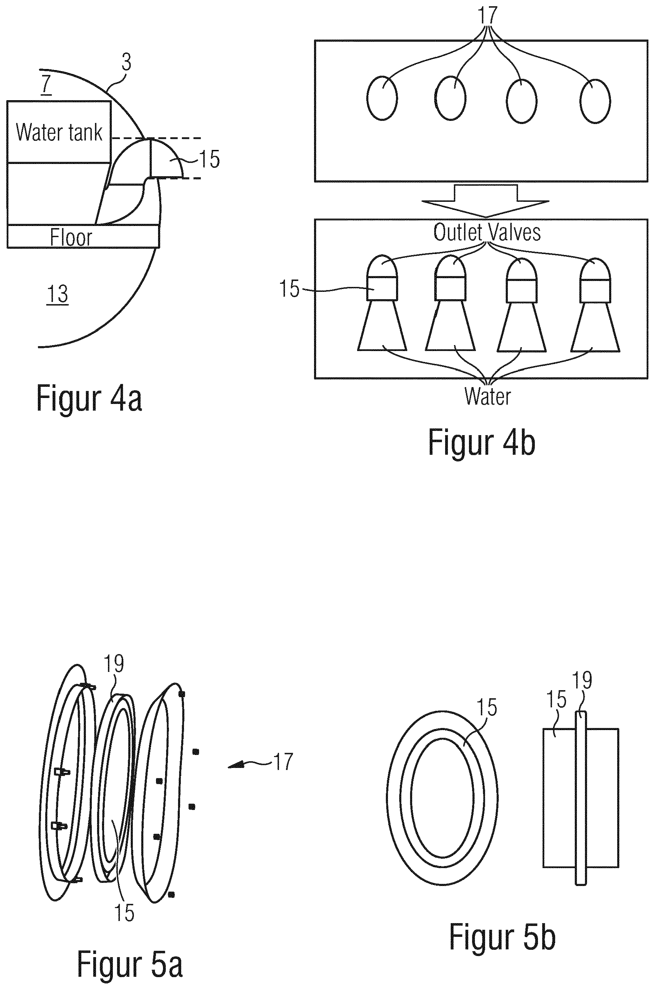

In Figur 4a sieht man wie sich ein Durchlass 15 seitlich des Flugzeugs 3 aus dem ehemaligen Fenster heraus vom Flugzeug weg erstreckt. Je nach gewünschtem Kostenaufwand können nur ein paar oder aber auch alle Fenster 17 gegen einen Einsatz mit einem Durchlass 15 für Löschmittel ausgetauscht werden, siehe Figur 4b.

Figur 5a zeigt ein ausgetauschtes Fenster in Explosionsdarstellung. Man sieht, dass es ein einfacher Austausch der ursprünglichen Fensterscheibe mit einem Blindfenster 19 ist, der einen integrierten Löschmitteldurchlass 15 hat. Dies kann man auch noch einmal in der seitlichen Darstellung des Blindfensters mit dem Durchlass in Figur 5b erkennen.

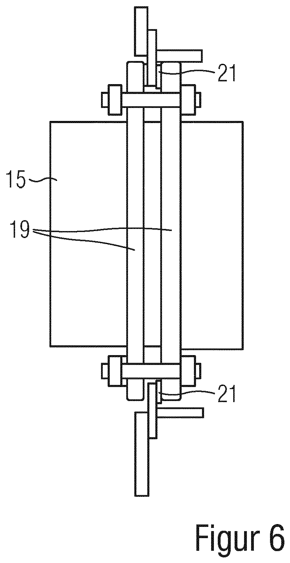

Und Figur 6 zeigt schlussendlich beispielhaft und schematisch den Querschnitt eines Blindfensters mit zwei Blindscheiben 19, mit Dichtungen 21 in Richtung des Außenrandes sowie einem integrierten Löschmittel-Durchlass 15.

## Patentansprüche

1. Verfahren (1) zum Umbau eines Passagierflugzeugs mit einem Passagierdeck (7) und einem darunter angeordneten Frachtdeck (13) in ein Löschflugzeug (3) mit den Schritten
a. Entfernen von Passagiersitzen aus dem Passagierdeck (7),
b. Entfernen von Seitenpaneelen aus dem Passagierdeck (7),
c. Integrieren von wenigstens einem Behälter (5) zur Aufnahme von Löschmittel in dem Passagierdeck (7), wobei der Behälter (5) mit Luft bedruckbar ist,
d. Auswechseln mehrerer Fenster (17) des Passagierdecks (7) durch Scheiben mit einem Durchlass (15),
e. Integrieren von Rohrleitungen (11) in das Passagierdeck (7) derart, dass Löschmittel aus den Behältern (5) über die Rohrleitungen (11) im Passagierdeck (7) und über wenigstens einen Durchlass (15) im Passagierdeck (7) vom Flugzeuginneren nach außerhalb des Flugzeugs (3) transportiert werden kann, und
f. Einbauen jeweils wenigstens eines steuerbaren Ventils an dem wenigstens einen Behälter (5), den Rohrleitungen (11) und dem Durchlass (15).

2. Verfahren (1) nach Anspruch 1, wobei das Verfahren (1) ferner den Schritt Einbauen einer elektrischen Kontrolleinheit umfasst, so dass das wenigstens eine Ventil mittels der Kontrolleinheit geöffnet oder geschlossen werden kann.

3. Verfahren (1) nach einem der vorherigen Ansprüche, wobei der Behälter (5) zur Aufnahme von Löschmittel ein starres Volumen aufweist.

4. Verfahren (1) nach einem der Ansprüche 1 oder 2, wobei der Behälter (5) zur Aufnahme von Löschmittel zumindest teilweise ein flexibles Volumen aufweist.

5. Verfahren (1) nach Anspruch 3, wobei der Schritt c) das Befestigen des Behälters (5) zur Aufnahme von Löschmittel an Sitzschienen mittels Tanklastverteilerpaletten umfasst.

6. Verfahren (1) nach Anspruch 4, wobei das Verfahren ferner den Schritt Einbauen eines dreidimensionalen Gerüsts in dem Passagierdeck umfasst, und wobei der Schritt c) das Befestigen des Behälters (5) zur Aufnahme von Löschmittel an dem dreidimensionalen Gerüst umfasst.

7. Flugzeug (3) mit einem Passagierdeck (7) und einem unterhalb davon angeordneten Frachtdeck (13), mit
wenigstens einem Behälter (5) zur Aufnahme von Löschmittel in dem Passagierdeck (7),
wenigstens einem Durchlass (15) in dem Passagierdeck (7) vom Flugzeuginneren ins Flugzeugäußere,
in dem Passagierdeck (7) angeordneten Rohrleitungen (11), derart, dass Löschmittel aus dem wenigstens einen Behälter (5) durch die Rohrleitungen (11) und den wenigstens einen Durchlass (15) vom Flugzeuginneren nach außerhalb des Flugzeugs (3) transportiert werden kann,
wobei der wenigstens eine Behälter (5) mit Luft bedruckbar ist, um Löschmittel von dem wenigstens einen Behälter (5) zu dem wenigstens einen Durchlass (15) und somit nach außerhalb des Flugzeugs (3) zu transportieren und
wobei der wenigstens eine Behälter (5), die Rohrleitungen (11) und der Durchlass (15) jeweils wenigstens ein mittels einer Kontrolleinheit steuerbares Ventil aufweisen.

8. Flugzeug (3) nach Anspruch 7 ferner mit einer Kontrolleinheit zum Öffnen und/oder Schließen des wenigstens einen Ventils.

9. Flugzeug (3) nach Anspruch 7 oder 8, wobei der Durchlass (15) in einem scheibenförmigen Einsatz (19) angeordnet ist, der in einer Flugzeugrumpfausnehmung für ein Fenster (17) des Passagierdecks (7) angeordnet ist.

10. Flugzeug (3) nach Anspruch 9, wobei der scheibenförmige Einsatz (19) Metall umfasst.

11. Flugzeug (3) nach einem der Ansprüche 7 bis 10, wobei der Behälter (5) zur Aufnahme von Löschmittel ein starres Volumen aufweist.

12. Flugzeug (3) nach einem der Ansprüche 7 bis 10, wobei der Behälter (5) zur Aufnahme von Löschmittel zumindest teilweise ein flexibles Volumen aufweist.

13. Flugzeug (3) nach Anspruch 11, wobei der Behälter (5) zur Aufnahme von Löschmittel an Sitzschienen mittels Tanklastverteilerpaletten befestigt ist.

14. Flugzeug (3) nach Anspruch 12, wobei ferner ein dreidimensionales Gerüst in dem Passagierdeck (7) angeordnet ist und wobei der Behälter (5) zur Aufnahme von Löschmittel an dem Gerüst befestigt ist.

## Claims

1. Method (1) for converting a passenger aircraft with a passenger deck (7) and with a cargo deck (13) arranged therebelow into a fire-fighting aircraft (3), comprising the steps of
a. removing passenger seats from the passenger deck (7),
b. removing side panels from the passenger deck (7),
c. integrating at least one container (5) for holding extinguishing agent in the passenger deck (7),
wherein the container (5) is pressurizable with air,
d. replacing multiple windows (17) of the passenger deck (7) with plates having a passage (15),
e. integrating pipelines (11) into the passenger deck (7) in such a way that extinguishing agent from the containers (5) can be transported from the inside of the aircraft to the outside of the aircraft (3) via the pipelines (11) in the passenger deck (7) and via at least one passage (15) in the passenger deck (7), and
f. installing in each case at least one controllable valve at the at least one container (5), the pipelines (11) and the passage (15).

2. Method (1) according to Claim 1, wherein the method (1) further comprises the step of installing an electrical control unit such that the at least one valve can be opened or closed by means of the control unit.

3. Method (1) according to either of the preceding claims, wherein the container (5) for holding extinguishing agent has a rigid volume.

4. Method (1) according to either of Claims 1 and 2, wherein the container (5) for holding extinguishing agent has a flexible volume at least in part.

5. Method (1) according to Claim 3, wherein step c) comprises fastening the container (5) for holding extinguishing agent to seat rails by means of tank-load-distributing pallets.

6. Method (1) according to Claim 4, wherein the method further comprises the step of installing a three-dimensional framework in the passenger deck, and wherein step c) comprises fastening the container (5) for holding extinguishing agent to the three-dimensional framework.

7. Aircraft (3) with a passenger deck (7) and with a cargo deck (13) arranged therebelow, having
at least one container (5) for holding extinguishing agent in the passenger deck (7),
at least one passage (15) in the passenger deck (7) from the inside of the aircraft to the outside of the aircraft, pipelines (11) arranged in the passenger deck (7), such that extinguishing agent from the at least one container (5) can be transported from the inside of the aircraft to the outside of the aircraft (3) through the pipelines (11) and the at least one passage (15),
wherein the at least one container (5) is pressurizable with air in order to transport extinguishing agent from the at least one container (5) to the at least one passage (15) and thus to the outside of the aircraft (3), and
wherein the at least one container (5), the pipelines (11) and the passage (15) each have at least one valve which is controllable by means of a control unit.

8. Aircraft (3) according to Claim 7, further having a control unit for opening and/or closing the at least one valve.

9. Aircraft (3) according to Claim 7 or 8, wherein the passage (15) is arranged in a plate-shaped insert (19) which is arranged in an aircraft-fuselage cutout for a window (17) of the passenger deck (7).

10. Aircraft (3) according to Claim 9, wherein the plate-shaped insert (19) comprises metal.

11. Aircraft (3) according to one of Claims 7 to 10, wherein the container (5) for holding extinguishing agent has a rigid volume.

12. Aircraft (3) according to one of Claims 7 to 10, wherein the container (5) for holding extinguishing agent has a flexible volume at least in part.

13. Aircraft (3) according to Claim 11, wherein the container (5) for holding extinguishing agent is fastened to seat rails by means of tank-load-distributing pallets.

14. Aircraft (3) according to Claim 12, wherein furthermore a three-dimensional framework is arranged in the passenger deck (7), and wherein the container (5) for holding extinguishing agent is fastened to the framework.

## Revendications

1. Procédé (1) de transformation d'un avion de ligne comprenant un pont passagers (7) et un pont de fret (13) disposé en dessous en un avion d'extinction d'incendie (3), comprenant les étapes suivantes :
a. le retrait de sièges passagers du pont passagers (7),
b. le retrait de panneaux latéraux du pont passagers (7),
c. l'intégration d'au moins un réservoir (5) destiné à recevoir un agent extincteur dans le pont passagers (7), le réservoir (5) pouvant être mis sous pression avec de l'air,
d. le remplacement de plusieurs fenêtres (17) du pont passagers (7) par des vitres comportant un passage traversant (15),
e. l'intégration de conduites (11) dans le pont passagers (7) de telle sorte que l'agent extincteur puisse être transporté depuis les réservoirs (5), via les conduites (11) dans le pont passagers (7) et via au moins un passage traversant (15) dans le pont passagers (7), de l'intérieur de l'avion vers l'extérieur de l'avion (3), et
f. le montage d'au moins une soupape commandable sur chacun parmi l'au moins un réservoir (5), les conduites (11) et le passage traversant (15).

2. Procédé (1) selon la revendication 1, le procédé (1) comprenant en outre l'étape de montage d'une unité de commande électrique, de sorte que l'au moins une soupape puisse être ouverte ou fermée au moyen de l'unité de commande.

3. Procédé (1) selon l'une des revendications précédentes, le réservoir (5) destiné à recevoir un agent extincteur présentant un volume rigide.

4. Procédé (1) selon l'une des revendications 1 ou 2, le réservoir (5) destiné à recevoir un agent extincteur présentant au moins partiellement un volume flexible.

5. Procédé (1) selon la revendication 3, l'étape c) comprenant la fixation du réservoir (5) destiné à recevoir un agent extincteur à des rails de sièges au moyen de palettes de répartition de charge de citerne.

6. Procédé (1) selon la revendication 4, le procédé comprenant en outre l'étape de montage d'une structure tridimensionnelle dans le pont passagers, et l'étape c) comprenant la fixation du réservoir (5) destiné à recevoir un agent extincteur à la structure tridimensionnelle.

7. Avion (3) comprenant un pont passagers (7) et un pont de fret (13) disposé en dessous de celui-ci, comprenant :
au moins un réservoir (5) destiné à recevoir un agent extincteur dans le pont passagers (7),
au moins un passage traversant (15) dans le pont passagers (7), de l'intérieur de l'avion vers l'extérieur de l'avion,
des conduites (11) disposées dans le pont passagers (7), de telle sorte que l'agent extincteur puisse être transporté depuis l'au moins un réservoir (5), à travers les conduites (11) et l'au moins un passage traversant (15), de l'intérieur de l'avion vers l'extérieur de l'avion (3),
l'au moins un réservoir (5) pouvant être mis sous pression avec de l'air afin de transporter l'agent extincteur depuis l'au moins un réservoir (5) jusqu'à l'au moins un passage traversant (15) et ainsi vers l'extérieur de l'avion (3), et
l'au moins un réservoir (5), les conduites (11) et le passage traversant (15) comportant chacun au moins une soupape commandable au moyen d'une unité de commande.

8. Avion (3) selon la revendication 7, comprenant en outre une unité de commande destinée à ouvrir et/ou fermer l'au moins une soupape.

9. Avion (3) selon la revendication 7 ou 8, le passage traversant (15) étant disposé dans un insert en forme de vitre (19), lequel est disposé dans une ouverture du fuselage de l'avion destinée à une fenêtre (17) du pont passagers (7).

10. Avion (3) selon la revendication 9, l'insert en forme de vitre (19) comprenant du métal.

11. Avion (3) selon l'une des revendications 7 à 10, le réservoir (5) destiné à recevoir un agent extincteur présentant un volume rigide.

12. Avion (3) selon l'une des revendications 7 à 10, le réservoir (5) destiné à recevoir un agent extincteur présentant au moins partiellement un volume flexible.

13. Avion (3) selon la revendication 11, le réservoir (5) destiné à recevoir un agent extincteur étant fixé à des rails de sièges au moyen de palettes de répartition de charge pour citerne.

14. Avion (3) selon la revendication 12, une structure tridimensionnelle étant en outre disposée dans le pont passagers (7), le réservoir (5) destiné à recevoir un agent extincteur étant fixé à la structure tridimensionnelle.
